# EUROPÄISCHE PATENTSCHRIFT

(11) **EP 1 963 559 B1**
(45) Veröffentlichungstag und Bekanntmachung des Hinweises auf die Patenterteilung: **09.01.2013**
(21) Anmeldenummer: 06830184.5
(22) Anmeldetag: 29.11.2006
(51) Int. Cl.: D06F 37/20, D06F 58/08

(54) **BEFESTIGUNGSVORRICHTUNG FÜR EINEN MOTOR IN EINEM HAUSHALTGERÄT**
FASTENING DEVICE FOR A MOTOR IN A HOUSEHOLD APPLIANCE
DISPOSITIF DE FIXATION D'UN MOTEUR DANS UN APPAREIL ELECTROMENAGER

(30) Priorität: 16.12.2005 DE 102005060362
(43) Veröffentlichungstag der Anmeldung: 03.09.2008
(73) Patentinhaber: BSH Bosch und Siemens Hausgeräte GmbH, 81739 München (DE)
(72) Erfinder: WEBER, Andreas, 16761 Hennigsdorf (DE)
(86) Internationale Anmeldenummer: PCT/EP2006/069042
(87) Internationale Veröffentlichungsnummer: WO 2007/068589

(56) Entgegenhaltungen:
- EP-A- 1 426 476
- EP-A1- 0 937 807
- DE-U1- 8 706 050

## Beschreibung

Die Erfindung betrifft eine Befestigungsvorrichtung für einen Motor in einem Haushaltgerät zur Pflege von Wäschestücken, insbesondere in einer Wäschewaschmaschine oder in einem Wäschetrockner.

Befestigungsvorrichtungen bzw. Halterungseinheiten für Motoren in Waschmaschinen sind bekannt. So ist beispielsweise in der DE 689 15 637 T2 eine Halterungseinheit für einen Elektromotor in einer Waschmaschine beschrieben, welche als Zweipunktmotorbefestigungsvorrichtung ausgebildet ist. Hinsichtlich der technischen Aspekte einer Befestigung des Motors relativ zu einem Getriebe ist es kritisch, dass die auf einer Welle befestigte Riemenscheibe an dem Motor in koplanaren Ausrichtung mit der auf der Welle befestigten Riemenscheibe an der Getriebebaugruppe gehalten wird. Wenn diese Beziehung nicht koplanar bleibt, wird der Riemen von den Riemenscheiben herunterlaufen und die Leistung wird nicht von dem Motor zu dem Getriebe übertragen. Die Anordnung des Motors relativ zu einem Getriebe und insbesondere im Hinblick auf den Riemen ist vonzentraler Bedeutung, um einen optimalen Betrieb und eine optimale Übertragung der durch den Motor erzeugten Kraft über den Riemen gewährleisten zu können. Der Motor muss daher insbesondere im Hinblick auf den Riemen in optimaler Lage positioniert sein.

Der aus dem Stand der Technik bekannte Motor wird auf einer Befestigungsplatte befestigt und mit Hilfe von zwei Befestigungsösen abgestützt. Die Ösen sind an der Befestigungsplatte durch Schrauben und daran befestigte Muttern befestigt.

Des Weiteren ist aus der DE 699 06 851 T2 eine Vorrichtung zum Befestigen des Motors an einem Laugenbehälter einer Waschmaschine bekannt. Der Kunststoff-Laugenbehälter der Waschmaschine weist in einer Ausführung zwei Vorsprünge auf, in die ein Paar ringförmiger Vorsprünge des Körpers des Motors in Bezug darauf so angeordnet werden können, dass zwischen ihnen ein peripherer freier Platz bleibt, in dem Kunststoffbuchsen angeordnet werden können. Der Motor wird in einer schwebenden Position mittels seiner zwei ringförmigen Vorsprünge befestigt. In die Kunststoffbuchse wird wiederum eine Schraube eingedreht, um den Motor an dem Laugenbehälter befestigen zu können.

Ein wesentlicher Nachteil bei den bekannten Befestigungsvorrichtungen ist darin zu sehen, dass die Befestigung mittels Schrauben relativ aufwändig ist.

Eine weitere Befestigungsvorrichtung für einen Motor in einem Haushaltgerät zur Pflege von Wäschestücken ist aus DE 87 06 050 U1 bekannt. Dabei weist der Motor zumindest zwei Verbindungsbereiche zur mechanischen Verbindung mit jeweils einem am Haushaltgerät ausgebildeten Haltebereich auf. Bei einer solchen Befestigungsvorrichtung ist die mechanische Verbindung zwischen einem Verbindungsbereich und dem Haltebereich durch ein Rastelement gesichert.

Daher ist es Aufgabe der vorliegenden Erfindung, eine Befestigungsvorrichtung für einen Motor in einem Haushaltgerät zu schaffen, welche einfach realisiert werden kann und eine aufwandsarme Befestigung ermöglicht.

Diese Aufgabe wird durch eine Befestigungsvorrichtung, welche die Merkmale nach Patentanspruch 1 oder 3 aufweist, gelöst.

Eine erfindungsgemäße Befestigungsvorrichtung für einen Motor in einem Haushaltgerät zur Pflege von Wäschestücken ist derart ausgebildet, dass der Motor zumindest zwei Verbindungsbereiche aufweist und jeder dieser Verbindungsbereiche zur mechanischen Verbindung mit jeweils einem Haltebereich des Haushaltgeräts ausgebildet ist. Zumindest eine mechanische Verbindung ist zwischen einem Verbindungsbereich und einem Haltebereich durch ein Rastelement gesichert. Ein wesentlicher Gedanke der Erfindung besteht darin, dass die Sicherung der Verbindung zwischen dem Motor und dem Haltebereich ausschließlich mit dem Rastelement erfolgen kann. Dadurch kann eine Befestigungsvorrichtung geschaffen werden, welche einfach realisiert werden kann und aufwandsarm eine Befestigung des Motors ermöglicht. Darüber hinaus kann die Montagezeit reduziert werden, da kein Eindrehen oder Ausdrehen der im Stand der Technik verwendeten Schrauben mehr erforderlich ist.

In einer vorteilhaften Ausbildung der Erfindung umfasst die Befestigungsvorrichtung ein Sicherungselement, das als stiftartiges Einsteckelement ausgebildet ist, mit welchem das Rastelement einstückig verbunden ist. Eine solche Weiterbildung ist von Vorteil, da solches Sicherungselement mit einem kleinen und einfachen Werkzeug unter Einhaltung sehr enger Toleranzen herstellbar ist. Somit kann eine nahezu spielfreie Rastverbindung zwischen dem Motor und dem Haltebereich sichergestellt werden. Darüber hinaus können die stiftartigen Einsteckelemente schnell und zielgenau angebracht werden und ermöglichen ein schnelles Anbringen als auch ein schnelles Entfernen. Darüber hinaus ist es nicht mehr erforderlich, ein oder mehrere spezielle Werkzeuge, insbesondere in der Fertigung bereitzustellen, um die im Stand der Technik verwendeten Schrauben anbringen zu können.

In vorteilhafter Weise ist das stiftartige Einsteckelement in seiner Endposition eingerastet positioniert. Da das stiftartige Einsteckelement mit dem Rastelement ausgebildet ist, kann das Einsteckelement einfach und zuverlässig als Sicherungselement zwischen dem Verbindungsbereich und einem Haltebereich eingebracht werden und positionsstabil in seiner Endposition fixiert werden.

In einer alternativen Ausbildung der Erfindung umfasst die Befestigungsvorrichtung zumindest ein mit einem Haltebereich verbundenes stiftartiges Trägerelement, das mit dem Rastelement einstückig zu einem Sicherungselement verbunden ist. Hierdurch kann das Rastelement zusammen mit dem Trägerelement und gegebenenfalls mit der Haltevorrichtung in einem Fertigungsschritt hergestellt werden, indem beispielsweise die Teile gemeinsam in einer Kunststoffspritzform abgespritzt werden.

In vorteilhafter Weise ist der Verbindungsbereich des Motors in seiner Endposition eingerastet positioniert. Somit kann der Motor positionsstabil in seiner Lage gehalten werden.

Als Sicherungselement wird im Weiteren sowohl das stiftartige Einsteckelement mit dem verbundenen Rastelement als auch das mit dem Haltebereich verbundene stiftartige Trägerelement, das einstückig mit dem Rastelement verbunden ist, verstanden. Die nachstehend genannten Weiterbildungen können völlig gleichwirkend auf ein Sicherungselement in Form des stiftartigen Einsteckelements oder des stiftartigen Trägerelements angewendet werden.

Das Sicherungselement weist in bevorzugter Weise einen ersten Endbereich auf, welcher zumindest konisch ausgebildet ist. Dieser erste Endbereich ist bevorzugt jener Endbereich, mit dem das Sicherungselement zunächst zum Ausbilden der mechanischen Verbindung zwischen dem Verbindungsbereich und dem Haltebereich eingebracht wird. Das Sicherungselement wird somit mit diesem ersten Endbereich voran eingesteckt bzw. der Verbindungsbereich auf diesen ersten Endbereich des Sicherungselements aufgesteckt. Durch die konische Ausgestaltung kann das Einführen bzw. das Einstecken erleichtert werden.

In vorteilhafter Weise ist der erste Endbereich an dem Ende, das an einen Mittelbereich des Sicherungselements angrenzt, breiter ausgebildet als der Mittelbereich. Der erste Endbereich weist in bevorzugter Weise an dem an diesen Mittelbereich angrenzenden Ende einen zumindest teilweise umlaufenden Steg auf. Durch eine solche Gestaltung des Sicherungselements wird das Rastelement im Bereich des ersten Endbereichs ausgebildet. Dadurch kann das Einrasten des Einsteckelements oder des Verbindungsbereiches auf dem Trägerelement in der Endposition zuverlässig ermöglicht werden.

Das Sicherungselement ist in vorteilhafter Weise zumindest im Bereich des ersten Endbereichs geschlitzt ausgebildet. Dadurch kann erreicht werden, dass das Sicherungselement im ersten Endbereich quasi zweiteilig ausgebildet ist und diese zwei Teile des Sicherungselemnts relativ zueinander bewegt werden können. Dadurch kann einerseits das Einführen des Verbindungsbereichs auf das Trägerelement bzw. das Einschieben oder das Einstecken des Einsteckelements zum Ausbilden einer mechanischen Verbindung zwischen dem Verbindungsbereich und dem Haltebereich vereinfacht und aufwandsarm durchgeführt werden und andererseits in der Endposition ein sicheres Arretieren des Verbindungselements bzw. des Einsteckelements gewährleistet werden. Insbesondere dann, wenn ein Einführungsbereich, in dem das Sicherungselement, also das Einsteckelement bzw. das Trägerelement, eingeführt wird, als Bohrung geringere Ausmaße im Durchmesser aufweist als das Sicherungselement im ersten Endbereich, kann dadurch erreicht werden, dass der Endbereich quasi zusammengedrückt werden kann und beim Erreichen der Endposition diese beiden Teile wieder automatisch in ihre ursprüngliche Position übergehen und sich voneinander entfernen und dadurch ein Einrasten und sicheres Positionieren ermöglicht wird.

Es kann auch vorgesehen sein, dass der erste Endbereich des Sicherungselements mehrmals geschlitzt ist und somit das Sicherungselement im Bereich des ersten Endbereichs eine Mehrzahl an Teilelementen aufweist, welche alle relativ zueinander bewegbar sind.

In vorteilhafter Weise ist das Sicherungselement zumindest über eine Länge zwischen einem zweiten Endbereich und dem geschlitzten Bereich hohl ausgebildet. Der zweite Endbereich ist dabei an dem dem ersten Endbereich gegenüberliegenden Ende des Mittelbereichs angeordnet. In vorteilhafter Weise ist in dem hohlen Kanal des Sicherungselements ein Sperrelement einführbar. Dieses Sperrelement kann als Sicherungsstift ausgebildet sein und ist in bevorzugter Weise länger als das Sicherungselement ausgebildet. Durch das Einführen eines derartigen Sperrelements kann das Sicherungselement in seiner Endposition nochmals gesichert werden, da insbesondere der geschlitzte Endbereich arretierbar ist. Die einzelnen Teile des ersten Endbereichs können durch das Sperrelement fixiert werden und eine relative Bewegung dieser Teile des ersten Endbereichs zueinander kann verhindert werden. Dadurch kann auch ein unerwünschtes Herausfallen des Einsteckelements aus der Endposition bzw. das Verschieben des Verbindungsbereiches auf dem Trägerelement verhindert werden.

In vorteilhafter Weise weist jeder Haltebereich zumindest ein Trägerelement, insbesondere Befestigungszapfen auf, wobei die Verbindungsbereiche des Motors derart ausgebildet sind, dass sie auf die Trägerelemente aufschiebbar sind. Der Motor kann dabei sehr zuverlässig in eine optimale Position im Hinblick auf einen mit dem Motor verbundenen Riemen positioniert werden.

In vorteilhafter Weise ist der Motor in seiner Einbaulage in einer Aufhängeposition angeordnet. Diese Aufhängeposition oder auch als schwebende Position zu bezeichnende Einbaulage ermöglicht ein bauteilreduziertes Anordnen und Befestigen des Motors. Eine eigene Befestigungsplatte ist nicht mehr erforderlich. Allein die mechanische. Verbindung zwischen den Verbindungsbereichen und den Haltebereichen ermöglichen ein zuverlässiges Anbringen des Motors. Das Sicherungselement und/oder das Sperrelement können vollständig aus Kunststoff oder vollständig aus Metall ausgebildet sein. Es kann jedoch auch vorgesehen sein, dass zumindest eines dieser beiden Elemente zumindest teilweise aus Kunststoff oder zumindest teilweise aus Metall ausgebildet ist.

Die Erfindung wird nachfolgend anhand schematischer Zeichnungen näher erläutert. Es zeigen:
- Fig. 1: eine Explosionsdarstellung eines Laugenbehälters, eines Motors und eines Riemens einer Waschmaschine;
- Fig. 2: eine Schnittdarstellung durch ein Sicherungselement der Befestigungsvorrichtung gemäß einem ersten Ausführungsbeispiel;
- Fig. 3: eine Schnittdarstellung durch ein Sicherungselement einer Befestigungsvorrichtung gemäß einem zweiten Ausführungsbeispiel
- Fig. 4: eine Schnittdarstellung durch einen Laugenbehälter mit der Befestigungsvorrichtung gemäß dem ersten Ausführungsbeispiel,
- Fig. 5: eine Schnittdarstellung durch einen Laugenbehälter mit einer Befestigungsvorrichtung gemäß eines dritten Ausführungsbeispiel und
- Fig. 6: eine weitere Schnittdarstellung durch einen Laugenbehälter mit dem Befestigungsvorrichtung gemäß dem dritten Ausführungsbeispiel.

In den Figuren werden gleiche oder funktionsgleiche Elemente mit gleichen Bezugszeichen versehen.

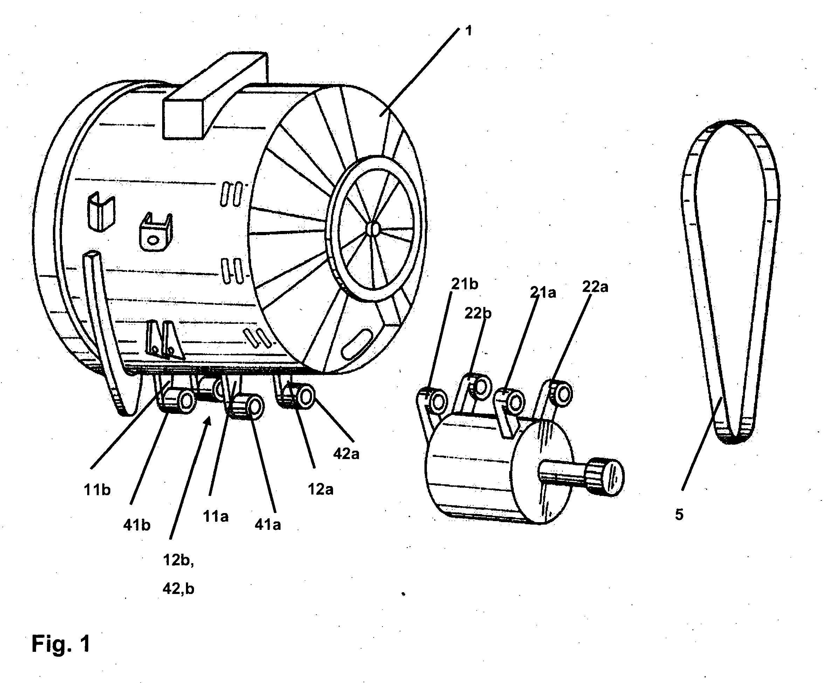

In Fig. 1 ist eine Explosionsdarstellung eines Ausschnitts eines Haushaltgeräts zur Pflege von Wäschestücken gezeigt. Im Ausführungsbeispiel ist dieses Haushaltgerät als Waschmaschine ausgebildet. Es kann jedoch auch vorgesehen sein, dass das Haushaltgerät beispielsweise als Wäschetrockner ausgebildet ist. Wie in der Darstellung in Fig. 1 zu erkennen ist, ist ein Laugenbehälter 1 mit einer Befestigungsvorrichtung ausgebildet, welche zur Befestigung eines Motors 2 an bzw. in der Waschmaschine ausgebildet ist. Es kann jedoch auch vorgesehen sein, dass der Motor 2 an einer sonstigen beliebigen Trägervorrichtung in der Waschmaschine mittels der Befestigungsvorrichtung befestigt wird.

Wie die Darstellung in Fig. 1 zeigt, weist der Motor 2 im Ausführungsbeispiel Verbindungsbereiche 21 a, 21 b, 22a und 22b auf. Die Befestigungsvorrichtung weist im Ausführungsbeispiel Haltebereiche 11a, 11b, 12a und 12b auf. Die Haltebereiche 11a, 11b, 12a und 12b weist im Ausführungsbeispiel die dargestellten Trägerelemente 41a, 41 b, 42a, 42b auf, welche beispielsweise als Befestigungszapfen ausgebildet sein können. Im dargestellten Ausführungsbeispiel sind jeweils vier Halte- und Verbindungsbereiche dargestellt, wobei in alternativen Ausführungen der Motor 2 und die Befestigungsvorrichtung eine davon abweichende Anzahl an Halte- und Verbindungsbereichen aufweisen können. Zur funktionssicheren Befestigung des Motors 2 sind zumindest zwei Verbindungsbereiche am Motor 2 vorgesehen.

Die Verbindungsbereiche 21 a, 21 b, 22a und 22b des Motors 2 sind derart ausgebildet, dass der Motor 2 mit diesen Verbindungsbereichen 21 a, 21 b, 22a und 22b mit den Haltebereichen 11a, 11b, 12a und 12b mechanisch verbunden werden kann. Dazu werden die Verbindungsbereiche 21a, 21b, 22a und 22b auf die Trägerelemente 41a, 41 b, 42a und 42b der Haltebereiche 11a, 11 b, 12a und 12b aufgeschoben.

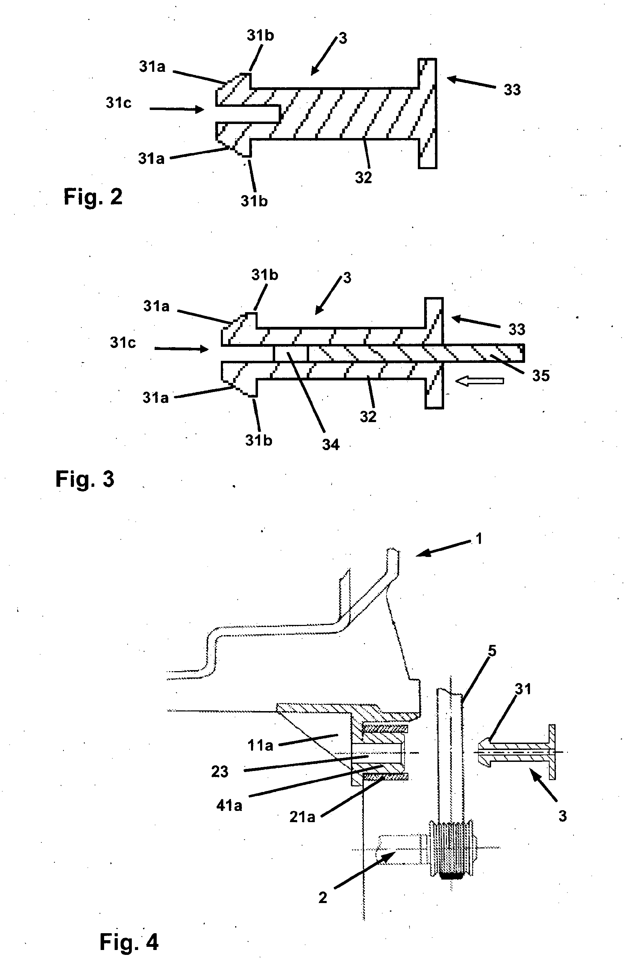

Zur Befestigung und positionsstabilen Anordnung des Motors 2 umfasst die Befestigungsvorrichtung in einem ersten in Figur 4 dargestellten Ausführungsbeispiel mindestens ein Rastelement 31, mit dem mindestens eine mechanische Verbindung zwischen einem Verbindungsbereich und dem jeweiligen Haltebereich, im dargestellten Ausführungsbeispiel zwischen dem Verbindungsbereich 21 a und dem Haltebereich 11 a, durch das Rastelement 31 gesichert ist. Dazu ist für die Befestigungsvorrichtung mindestens ein in den Figuren 2, 3 und 4 dargestelltes Sicherungselement 3 vorgesehen, das als stiftartiges Einsteckelement ausgebildet und das mit dem Rastelement 31 einstückig verbunden ist. Zur stabilen mechanischen Verbindung wird das Sicherungselement 3 im Bereich der mechanischen Verbindung zwischen einem Haltebereich, beispielsweise 11a, und dem diesem Haltebereich zugeordneten Verbindungsbereich 21a angeordnet. Das Sicherungselement 3 wird dabei in die dargestellte Einstecköffnung 23 eingeführt. In analoger Weise können auch die weiteren Verbindungsbereiche 11 b, 12a und 12b mit den jeweiligen Haltebereichen 21 b, 22a und 22b mechanisch verbunden werden.

Das Sicherungselement 3 wird derart eingesteckt bzw. eingeführt, dass es in einer nicht in Figur dargestellten Endposition einrastet und sich somit nicht mehr selbstständig lösen kann. Die mechanische Verbindung zwischen den Bereichen 11a und 21a bzw. die mechanischen Verbindungen zwischen den Bereichen 11b, 12a, 12b und 21 b, 22a, 22b, wenn mehrere Sicherungselemente 3 umfasst sind, können durch die Sicherungselemente 3 somit in einfacher und zuverlässigerer Weise fixiert werden.

Wie aus der Darstellung in Fig. 1 des Weiteren zu erkennen ist, wird im Ausführungsbeispiel eine so genannte Vier-Punkt-Verbindung zwischen dem Motor 2 und dem Laugenbehälter 1 verwendet. Die Halte- und Verbindungsbereiche können aber derartig ausgebildet sein, dass lediglich eine Zwei-Punkt-Verbindung zwischen dem Motor 2 und dem Laugenbehälter 1 zur Befestigung des Motors 2 ausreicht. Es kann jedoch auch vorgesehen sein, dass mehr als zwei derartige mechanische Verbindungen ausgebildet sind.

Der Motor 2 ist im Ausführungsbeispiel in seiner Einbaulage in einer Aufhängeposition angeordnet. Die Aufhängeposition bzw. die Aufhängepunkte werden durch die mechanischen Verbindungen zwischen den jeweils zugeordneten Halte- und Verbindungsbereichen, beispielsweise 11 a und 21 a bzw. 11 b und 21 b, usw., gebildet. Im Übrigen ist der Motor 2 quasi freischwebend angeordnet.

Wie des Weiteren aus der Darstellung in Fig. 1 zu erkennen ist, ist der Motor 2 mit einem Riemen 5 gekoppelt, welcher beispielsweise zum Antrieb eines Getriebes oder einer Trommel oder aber auch von sonstigen Elementen der Waschmaschine vorgesehen sein kann. Durch die Befestigungsvorrichtung kann der Motor 2 derart positioniert werden, dass er im Hinblick auf die Betätigung des Riemens 5 in optimaler Position angeordnet ist. Der Riemen 5 kann somit verschleißarm umlaufen und eine bestmögliche Übertragung der durch den Motor generierten Kraft ermöglichen.

In Fig. 2 ist eine Schnittdarstellung des Sicherungselements 3 gezeigt. Wie aus der Darstellung in Fig. 2 zu erkennen ist, weist das Sicherungselement 3 einen ersten Endbereich 31, einen an den ersten Endbereich 31 angrenzenden Mittelbereich 32 und einen daran angrenzenden zweiten Endbereich 33 auf. Wie zu erkennen ist, weist das erste Sicherungselement 3 eine stiftartige Formgebung auf.

Der erste Endbereich 31 ist an seinem dem Mittelbereich 32 abgewandten Ende 31 a konisch ausgebildet. Der konische Bereich 31a geht in einen stumpfförmigen Bereich über, welcher im Ausführungsbeispiel als teilweise umlaufender Steg 31 b ausgebildet ist. Wie zu erkennen ist, ist der Steg 31b breiter ausgebildet, als der Mittelbereich 32. Aufgrund dieser unterschiedlichen Ausmaße kann durch den Steg 31b quasi eine Rastnase bzw. Rastennasen ausgebildet werden, die ein Verrasten des ersten Sicherungselements 3 in der Endposition ermöglichen. Die Rastnase bzw. die Rastnasen bilden das Rastelement 31 in dem ersten Endbereich 31 des Sicherungselements 3 aus. Im diesem Ausführungsbeispiel haben der erste Endbereich 31 und das Rastelement 31 dieselbe Längsersteckung, weshalb sie mit demselben Index bezeichnet werden. Der erste Endbereich und das Rastelement können aber auch voneinander abweichende Längsersteckungen haben.

Wie des Weiteren in Fig. 2 zu erkennen ist, ist zumindest in dem ersten Endbereich 31 das Sicherungselement 3 geschlitzt ausgebildet. Der geschlitzte Bereich 31 c ragt im gezeigten Ausführungsbeispiel auch teilweise in den Mittelbereich 32 hinein. Durch diese geschlitzte Ausgestaltung wird zumindest der erste Endbereich 31 und ein Teil des Mittelbereichs 32 voneinander separiert, so dass durch den geschlitzten Bereich 31 c eine Zweiteilung zumindest des ersten Endbereichs 31 erfolgt. Diese beiden Teile können dann relativ zueinander bewegt werden, insbesondere federnd zueinander bewegt werden. Dadurch kann ein einfaches Einführen des Sicherungselements 3 in einen entsprechenden Einführbereich 23, welcher zum Verbinden der Halte- und Verbindungsbereiche vorgesehen ist, ermöglicht werden.

Der zweite Endbereich 33 ist gemäß einem Nagelkopf ausgebildet.

In Fig. 3 ist eine weitere Schnittdarstellung eines Sicherungselements 3 gezeigt. In dieser Ausgestaltung weist das Sicherungselement 3 im Unterschied zur Darstellung in Fig. 2 einen hohlen Kanal 34 auf, welcher im Mittelbereich 32 und im zweiten Endbereich 33 ausgebildet ist. Der hohle Kanal 34 bzw. die Bohrung reicht bis zum geschlitzten Bereich 31 c. Wie aus der Darstellung in Fig. 3 zu erkennen ist, ist in diesen hohlen Kanal 34 ein Sperrelement 35 teilweise eingeschoben. Das Sperrelement 35 weist im Ausführungsbeispiel eine Länge auf, welche größer ist, als die Länge des Sicherungselements 3. Das Sperrelement 35 ist im Ausführungsbeispiel als Sicherungsstift ausgebildet und erstreckt sich im vollständig eingeschobenen Zustand vom äußersten Ende des ersten Endbereichs. 31 (in Fig. 3 linker Rand) bis über den zweiten Endbereich 33 hinaus.

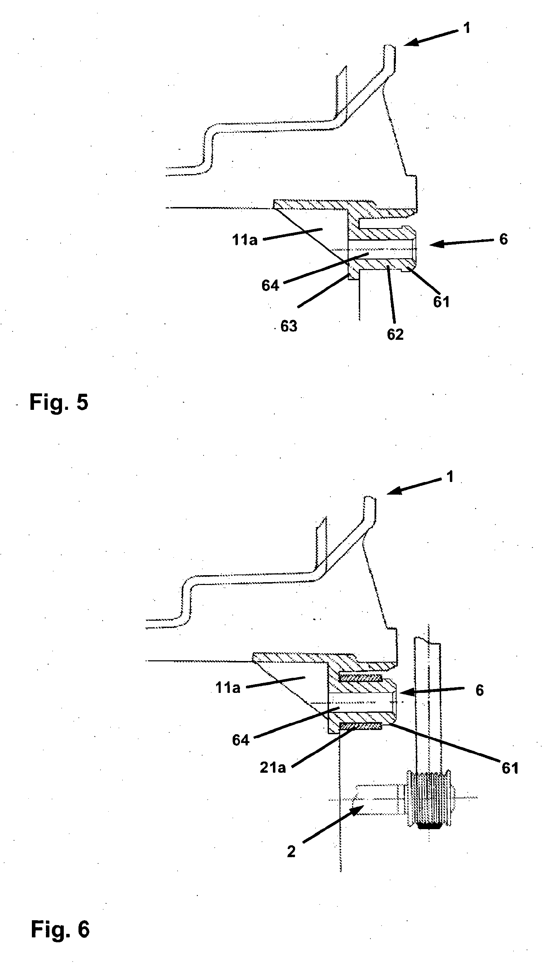

In den Figuren 5 und 6 ist ein weiteres Ausführungsbeispiel der Erfindung dargestellt. Die Figuren zeigen einen Schnitt durch den Laugenbehälter 1 einer Waschmaschine an einem Haltebereich 11a, an dem ein stiftartiges Trägerelement 62 angebunden ist. Mit dem Trägerelement 62 ist das Rastelement 61, das in gleicher Weise wie das Rastelement 31 des stiftartigen Einsteckelementes 3 ausgebildet ist, einstückig verbunden. Das Trägerelement 62 bildet mit dem Rastelement 61 ein Sicherungselement 6, auf das das Verbindungselement 21a aufgesteckt bzw. aufgeschoben werden kann. Das Verbindungselement 21a und somit auch der mit dem Verbindungselement 21a verbundene Motor 2 werden mit dem derartig ausgebildeten Sicherungselement 6 in seiner in Fig. 6 gezeigten Endposition eingerastet positioniert. Der besondere Vorteil dieser Ausführung liegt darin, dass zur sicheren Positionierung des Motors 2 das Trägerelement 62 und das Rastelement 61 zusammen mit dem Laugenbehälter 1 als ein Bauteil hergestellt werden kann. In diesem Fall werden die Bauteile vorteilhafterweise in Kunststoff ausgeführt. Somit werden zur Sicherung des Motors 2 an dem Laugenbehälter 1 keine weiteren Elemente benötigt.

Alternativ kann das Sicherungselement 6, das aus dem Rastelement 61 und dem Trägerelement 62 besteht, und/oder der Haltebereich 11a aus Metall bestehen, wobei bei einer solchen Ausführung das Sicherungselement 6 beispielsweise mit dem Haltebereich 11a über eine Schraub-, Rast- oder Schweißverbindung verbunden ist.

In den Figuren 5 und 6 ist nur ein Haltebereich 11a gezeigt, der mit einem Sicherungselement 6 verbunden ist. In gleicher Weise kann auch für mehrere Haltebereiche oder jeden Haltebereich ein solches Sicherungselement 6 vorgesehen sein.

In der in den Figuren 5 und 6 dargestellten Ausführung verfügt das Sicherungselement 6, wie das Sicherungselement 3, über einen ersten Endbereich 61, der zumindest teilweise konisch ausgebildet ist. Dieser erste Endbereich 61 ist an einem an einem Mittelbereich 62 des Sicherungselements 6 angrenzenden Ende breiter ausgebildet und hat einen zumindest teilweise umlaufenden Steg. Dieser Steg ist analog zu dem Steg 31b des Sicherungselement 3 ausgebildet.

Darüber hinaus kann vorteilhafterweise das Sicherungselement 6 zumindest im Bereich des ersten Endbereichs einen nicht dargestellten Schlitz aufweisen. Der geschlitzte Bereich kann auch teilweise in den Mittelbereich 62 hineinragen. Durch diese geschlitzte Ausgestaltung wird zumindest der erste Endbereich 61 und ein Teil des Mittelbereichs 62 voneinander separiert, so dass durch den geschlitzten Bereich eine Zweiteilung zumindest des ersten Endbereichs 61 erfolgt. Diese beiden Teile können dann relativ zueinander bewegt werden, insbesondere federnd zueinander bewegt werden. Dadurch kann ein einfaches Einführen eines entsprechenden Einführbereichs des Verbindungselements 21 a auf das Sicherungselements 6 ermöglicht werden.

In das Sicherungselement 6 kann analog zur Ausführung des Sicherungselements 3 in einem weiteren nicht dargestellten Ausführungsbeispiel ein Sperrelement in einen hohlen Kanal 64 eingeführt werden, welcher zumindest im Mittelbereich 62 und im zweiten Endbereich 63 ausgebildet ist. Der hohle Kanal 64 bzw. die Bohrung reicht bis zum geschlitzten Bereich. Das Sperrelement weist eine Länge auf, welche größer ist, als die Länge des Sicherungselements 6. Das Sperrelement ist wie im Ausführungsbeispiel des Sicherungselements 3 als Sicherungsstift ausgebildet und erstreckt sich vom äußersten Ende des ersten Endbereichs 61 bis über den zweiten Endbereich 63 hinaus.

Im den vorliegenden Ausführungsbeispielen sind die Haltebereiche (11a, 11b, 12a, 12b) an einem Laugenbehälter 1 einer Wäschewaschmaschine angeordnet. Die Erfindung ist nicht auf eine solche Anordnung beschränkt. Die Haltebereiche können auch an anderen Bauteilen des Haushaltgeräts, beispielsweise an einem tragenden Gehäusebauteil eines Wäschetrockners, angeordnet sein.

## Patentansprüche

1. Befestigungsvorrichtung für einen Motor (2) in einem Haushaltgerät zur Pflege von Wäschestücken, wobei der Motor (2) zumindest zwei Verbindungsbereiche (21 a, 21 b, 22a, 22b) aufweist, jeder Verbindungsbereich (21a, 21 b, 22a, 22b) zur mechanischen Verbindung mit jeweils einem Haltebereich (11a, 11b, 12a, 12b) des Haushaltgeräts ausgebildet ist und mindestens eine mechanische Verbindung zwischen einem Verbindungsbereich (21a, 21 b, 22a, 22b) und dem jeweiligen Haltebereich (11a, 11 b, 12a, 12b) durch ein Rastelement (31, 61) gesichert ist, **dadurch gekennzeichnet, dass** die Befestigungsvorrichtung zumindest ein Sicherungselement (3) umfasst, das als stiftärtiges Einsteckelement (3) ausgebildet ist, mit dem das Rastelement (31) einstückig verbunden ist.

2. Befestigungsvorrichtung nach Anspruch 1, **dadurch gekennzeichnet, dass** das stiftartige Einsteckelement (3) in seiner Endposition eingerastet positioniert ist.

3. Befestigungsvorrichtung für einen Motor (2) in einem Haushaltgerät zur Pflege von Wäschestücken, wobei der Motor (2) zumindest zwei Verbindungsbereiche (21 a, 21 b, 22a, 22b) aufweist, jeder Verbindungsbereich (21a, 21 b, 22a, 22b) zur mechanischen Verbindung mit jeweils einem Haltebereich (11a, 11b, 12a, 12b) des Haushaltgeräts ausgebildet ist und mindestens eine mechanische Verbindung zwischen einem Verbindungsbereich (21a, 21b, 22a, 22b) und dem jeweiligen Haltebereich (11a, 11b, 12a, 12b) durch ein Rastelement (31, 61) gesichert ist, , **dadurch gekennzeichnet, dass** zumindest ein mit einem Haltebereich (11a, 11 b, 12a, 12b) verbundenes stiftartiges Trägerelement (62) umfasst ist, das mit dem Rastelement (61) einstückig zu einem Sicherungselement (6) verbunden ist.

4. Befestigungsvorrichtung nach Anspruch 3, **dadurch gekennzeichnet, dass** der Motor (2) in seiner Endposition eingerastet positioniert ist.

5. Befestigungsvorrichtung nach einem der Ansprüche 1 bis 4, **dadurch gekennzeichnet, dass** das Sicherungselement (3, 6) einen ersten Endbereich (31, 61) aufweist, welcher zumindest teilweise konisch ausgebildet ist.

6. Befestigungsvorrichtung nach Anspruch 5, **dadurch gekennzeichnet, dass** der erste Endbereich (31, 61) an dem Ende, das an einen Mittelbereich (32, 62) des Sicherungselements (3, 6) angrenzt, breiter ausgebildet ist als der Mittelbereich (32, 62).

7. Befestigungsvorrichtung nach Anspruch 6, **dadurch gekennzeichnet, dass** der erste Endbereich (31, 61) an dem Ende, das an den Mittelbereich (32, 62) angrenzt, einen zumindest teilweise umlaufenden Steg (31 b) aufweist.

8. Befestigungsvorrichtung nach einem der Ansprüche 5 bis 7, **dadurch gekennzeichnet, dass** das Sicherungselement (3, 6) zumindest im Bereich des ersten Endbereichs (31, 61) geschlitzt ausgebildet ist.

9. Befestigungsvorrichtung nach Anspruch 8, **dadurch gekennzeichnet, dass** das Sicherungselement (3, 6) zumindest über eine Länge zwischen einem zweiten Endbereich (33, 63) und dem geschlitzten Bereich (32c) einen hohlen Kanal (34, 64) aufweist.

10. Befestigungsvorrichtung nach Anspruch 9, **dadurch gekennzeichnet, dass** ein Sperrelement (35) umfasst ist, das in den hohlen Kanal (34, 64) einführbar ist.

11. Befestigungsvorrichtung nach Anspruch 10, **dadurch gekennzeichnet, dass** das Sperrelement (35) länger als das Sicherungselement (3, 6) ist.

12. Befestigungsvorrichtung nach einem der vorhergehenden Ansprüche **dadurch gekennzeichnet, dass** jeder Haltebereich (11a, 11 b, 12a, 12b) zumindest ein Trägerelement (41 a, 41 b, 42a, 42b, 62) aufweist, wobei die Verbindungsbereiche (21 a, 21 b, 22a, 22b) des Motors (2) derart ausgebildet sind, dass sie auf die Trägerelemente (41 a, 41 b, 42a, 42b, 62) aufschiebbar sind.

13. Befestigungsvorrichtung nach einem der vorhergehenden Ansprüche, **dadurch gekennzeichnet, dass** der Motor (2) in seiner Einbaulage in einer Aufhängeposition angeordnet ist.

14. Haushaltgerät zur Pflege von Wäschestücken, insbesondere eine Wäschewaschmaschine oder ein Wäschetrockner, mit einem Motor (2), der zumindest zwei Verbindungsbereiche (21a, 21b, 22a, 22b) aufweist und jeder Verbindungsbereich (21a, 21 b, 22a, 22b) zur mechanischen Verbindung mit jeweils einem Haltebereich (11a, 11 b, 12a, 12b) des Haushaltgeräts oder eines Bauteil des Haushaltgeräts ausgebildet ist, **dadurch gekennzeichnet, dass** mindestens eine mechanische Verbindung zwischen einem Verbindungsbereich (21 a, 21 b, 22a, 22b) und dem jeweiligen Haltebereich (11a, 11b, 12a, 12b) durch eine Befestigungsvorrichtung nach einem der vorstehenden Ansprüche gesichert ist.

## Claims

1. Fastening device for a motor (2) in a domestic appliance for treatment of laundry articles, wherein the motor (2) has at least two connecting regions (21 a, 21 b, 22a, 22b), each connecting region (21 a, 21 b, 22a, 22b) is constructed for mechanical connection with a respective mounting region (11a, 11b, 12a, 12b) of the domestic appliance and at least one mechanical connection between a connecting region (21 a, 21 b, 22a, 22b) and the respective mounting region (11a, 11b, 12a, 12b) is secured by a detent element (31, 61), **characterised in that** the fastening device comprises at least one securing element (3), which is constructed as a pin-like insertion element (3) with which the detent element (31) is integrally connected.

2. Fastening device according to claim 1, **characterised in that** the pin-like insertion element (3) is positioned detented in its end position.

3. Fastening device for a motor (2) in a domestic appliance for treatment of laundry articles, wherein the motor (2) has at least two connecting regions (21 a, 21 b, 22a, 22b), each connecting region (21 a, 21 b, 22a, 22b) is constructed for mechanical connection with a respective mounting region (11a, 11b, 12a, 12b) of the domestic appliance and at least one mechanical connection between a connecting region (21 a, 21 b, 22a, 22b) and the respective mounting region (11a, 11b, 12a, 12b) is secured by a detent element (31, 61), **characterised in that** at least one pin-like support element (62), which is connected with a mounting region (11a, 11b, 12a, 12b), is included, which is integrally connected with the detent element (61) to form a securing element (6).

4. Fastening device according to claim 3, **characterised in that** the motor (2) is positioned detented in its end position.

5. Fastening device according to any one of claims 1 to 4, **characterised in that** the securing element (3, 6) has a first end region (31, 61) which is formed to be conical at least in part.

6. Fastening device according to claim 5, **characterised in that** the first end region (31, 61) is constructed at the end, which adjoins a middle region (32, 62) of the securing element (3, 6), to be wider than the middle region (32, 62).

7. Fastening device according to claim 6, **characterised in that** the first end region (31, 61) has at the end, which adjoins the middle region (32, 62), an at least partly encircling web (31 b).

8. Fastening device according to any one of claims 5 to 7, **characterised in that** the securing element (3, 6) is constructed to be slotted at least in the region of the first end region (31, 61).

9. Fastening device according to claim 8, **characterised in that** the securing element (3, 6) has a hollow channel (34, 64) at least over a length between a second end region (33, 63) and the slotted region (32c).

10. Fastening device according to claim 9, **characterised in that** a blocking element (35) is included, which is insertable into the hollow channel (34, 64).

11. Fastening device according to claim 10, **characterised in that** the blocking element (35) is longer than the securing element (3, 6).

12. Fastening device according to any one of the preceding claims, **characterised in that** each mounting region (11 a, 11b, 12a, 12b) has at least one support element (41 a, 41 b, 42a, 42b, 62), wherein the connecting regions (21 a, 21 b, 22a, 22b) of the motor (2) are so constructed that they can be pushed onto the support elements (41 a, 41 b, 42a, 42b, 62).

13. Fastening device according to any one of the preceding claims, **characterised in that** the motor (2) in its installed position is arranged in a suspended position.

14. Domestic appliance for treatment of laundry articles, particularly a laundry washing machine or a laundry dryer, with a motor (2), which has at least two connecting regions (21 a, 21 b, 22a, 22b) and each connecting region (21 a, 21 b, 22a, 22b) is constructed for mechanical connection with a respective mounting region (11a, 11b, 12a, 12b) of the domestic appliance or of a component of the domestic appliance, **characterised in that** at least one mechanical connection between a connecting region (21 a, 21 b, 22a, 22b) and the respective mounting region (11a, 11b, 12a, 12b) is secured by a fastening device according to any one of the preceding claims.

## Revendications

1. Dispositif de fixation d'un moteur (2) dans un appareil électroménager destiné à l'entretien de linge, le moteur (2) présentant au moins deux zones de raccordement (21 a, 21 b, 22a, 22b), chaque zone de raccordement (21 a, 21 b, 22a, 22b) étant réalisée pour le raccordement mécanique à respectivement une zone de maintien (11 a, 11 b, 12a, 12b) de l'appareil électroménager et au moins un raccordement mécanique entre une zone de raccordement (21 a, 21 b, 22a, 22b) et la zone de maintien respective (11a, 11 b, 12a, 12b) étant assuré au moyen d'un élément d'enclenchement (31, 61), **caractérisé en ce que** le dispositif de fixation comprend au moins un élément de sécurité (3) qui est réalisé comme élément enfichable (3) en forme de goupille, auquel l'élément d'enclenchement (31) est raccordé d'une seule pièce.

2. Dispositif de fixation selon la revendication 1, **caractérisé en ce que** l'élément enfichable (3) en forme de goupille est positionné en étant enclenché dans sa position finale.

3. Dispositif de fixation d'un moteur (2) dans un appareil électroménager destiné à l'entretien de linge, le moteur (2) présentant au moins deux zones de raccordement (21 a, 21 b, 22a, 22b), chaque zone de raccordement (21 a, 21 b, 22a, 22b) étant réalisée pour le raccordement mécanique à respectivement une zone de maintien (11 a, 11 b, 12a, 12b) de l'appareil électroménager et au moins un raccordement mécanique entre une zone de raccordement (21 a, 21 b, 22a, 22b) et la zone de maintien respective (11 a, 11 b, 12a, 12b) étant assuré au moyen d'un élément d'enclenchement (31, 61), **caractérisé en ce qu'**au moins un élément de support (62) en forme de goupille, raccordé à une zone de maintien (11a, 11b, 12a, 12b) est compris, lequel est relié à l'élément d'enclenchement (61) d'une seule pièce en un élément de sécurité (6).

4. Dispositif de fixation selon la revendication 3, **caractérisé en ce que** le moteur (2) est positionné en étant enclenché dans sa position finale.

5. Dispositif de fixation selon l'une quelconque des revendications 1 à 4, **caractérisé en ce que** l'élément de sécurité (3, 6) présente une première zone terminale (31, 61) laquelle est réalisée au moins en partie de manière conique.

6. Dispositif de fixation selon la revendication 5, **caractérisé en ce que** la première zone terminale (31, 61), sur l'extrémité qui est adjacente à une partie médiane (32, 62) de l'élément de sécurité (3, 6), est réalisée de manière plus large que la partie médiane (32, 62).

7. Dispositif de fixation selon la revendication 6, **caractérisé en ce que** la première zone terminale (31, 61) présente sur l'extrémité adjacente à la partie médiane (32, 62) une nervure (31 b) continue au moins en partie.

8. Dispositif de fixation selon l'une quelconque des revendications 5 à 7, **caractérisé en ce que** l'élément de sécurité (3, 6) est réalisé en étant fendu au moins dans la partie de la première zone terminale (31, 61).

9. Dispositif de fixation selon la revendication 8, **caractérisé en ce que** l'élément de sécurité (3, 6) présente au moins un canal creux (34, 64) sur une longueur comprise entre une seconde zone terminale (33, 63) et la partie fendue (32c).

10. Dispositif de fixation selon la revendication 9, **caractérisé en ce qu'**un élément de blocage (35) est compris, lequel est insérable dans le canal creux (34, 64).

11. Dispositif de fixation selon la revendication 10, **caractérisé en ce que** l'élément de blocage (35) est plus long que l'élément de sécurité (3, 6).

12. Dispositif de fixation selon l'une quelconque des revendications précédentes, **caractérisé en ce que** chaque zone de maintien (11a, 11 b, 12a, 12b) présente au moins un élément de support (41a, 41b, 42a, 42b, 62), les zones de raccordement (21 a, 21 b, 22a, 22b) du moteur (2) étant réalisées de manière à ce qu'elles soient enfichables sur les éléments de support (41 a, 41 b, 42a, 42b, 62).

13. Dispositif de fixation selon l'une quelconque des revendications précédentes, **caractérisé en ce que** le moteur (2), dans sa position d'installation, est disposé dans une position suspendue.

14. Appareil électroménager pour l'entretien de linge, notamment lave-linge ou sèche-linge, comprenant un moteur (2) qui présente au moins deux zones de raccordement (21 a, 21 b, 22a, 22b) et chaque zone de raccordement (21 a, 21 b, 22a, 22b) étant réalisée pour le raccordement mécanique à respectivement une zone de maintien (11 a, 11 b, 12a, 12b) de l'appareil électroménager ou d'un composant de l'appareil électroménager, **caractérisé en ce qu'**au moins un raccordement mécanique entre une zone de raccordement (21 a, 21 b, 22a, 22b) et la zone de maintien respective (11 a, 11 b, 12a, 12b) est assuré au moyen d'un élément de fixation selon l'une quelconque des revendications précédentes.
